# EUROPÄISCHE PATENTSCHRIFT

(11) **EP 2 902 270 B1**
(45) Veröffentlichungstag und Bekanntmachung des Hinweises auf die Patenterteilung: **20.09.2017**
(21) Anmeldenummer: 15150471.9
(22) Anmeldetag: 08.01.2015
(51) Int. Cl.: B60R 19/34

(54) **Stoßfänger für ein Kraftfahrzeug**
Shock absorber for a motor vehicle
Pare-chocs pour un véhicule automobile

(30) Priorität: 31.01.2014 DE 102014101186
(43) Veröffentlichungstag der Anmeldung: 05.08.2015
(73) Patentinhaber: GEDIA Gebrüder Dingerkus GmbH, 57439 Attendorn (DE)
(72) Erfinder: Rottmann, Ralf, 57489 Dolshagen (DE); Zhao, Jihua, 47443 Moers (DE)
(74) Vertreter: Köchling, Conrad-Joachim

(56) Entgegenhaltungen:
- WO-A1-2007/102755
- DE-A1- 19 958 887
- DE-A1-102011 116 114
- GB-A- 2 307 665

## Beschreibung

Die Erfindung betrifft einen Stoßfänger für ein Kraftfahrzeug, zumindest bestehend aus einem Stoßfängerquerträger und mindestens zwei von einander beabstandeten, mittelbar oder unmittelbar mit einem ersten eine erste Kante bildenden Endbereich an dem Stoßfängerquerträger und mit einem zweiten, eine zweite Kante bildenden Endbereich an am Kraftfahrzeug ausgebildeten Chassisteilen oder Längsträgerteilen angeordneten Crashboxen, wobei die Crashboxen aus mindestens einem Hohlprofilabschnitt aus Metall mit einer ersten und einer zweiten Kante an seinen Enden bestehen und zur Energieabsorption von in Längsrichtung des Kraftfahrzeugs auftretenden Kräften als Deformationselement ausgebildet sind, wobei innerhalb des Hohlprofilabschnitts jeder Crashbox mindestens ein weiterer Hohlprofilabschnitt aus Metall angeordnet ist, der an mindestens einer Stirnseite eine von der einen Geradschnitt bildenden Endkante des Hohlprofilabschnitts abweichende Endkante aufweist, sodass im Crashfall eine unterschiedliche Lastaufnahme bis zum Erreichen des Gesamtquerschnitts erfolgt, indem zu Beginn eines Crashumformereignisses nur ein Teil des Querschnitts des weiteren Hohlprofilabschnittes an der Umformung teilnimmt und erst nach einem gewissen Verformungsweg dessen gesamter Querschnitt an der Umformung teilnimmt, und dass der weitere Hohlprofilabschnitt eine vom Hohlprofilabschnitt abweichende Querschnittsform aufweist.

Derartige Stoßfänger mit zwischen dem Stoßfängerquerträger und einer zwischen dem Stoßfängerquerträger einerseits und einem Längsträger des Kraftfahrzeuges andererseits angeordneten Crashbox sind im Stand der Technik vielfach bekannt. Dabei sind Crashboxen zum Absorbieren von kinetischer Energie, die auf den Stoßfänger eines Kraftfahrzeuges im Falle eines Unfalls insbesondere im Niedrig-Geschwindigkeitsbereich einwirkt, in verschiedenen Ausführungen bekannt. Derartige Crashboxen sind üblicherweise zwischen dem Stoßfängerquerträger und Chassisteilen wie beispielsweise den Längsträgern eines Fahrzeuges angeordnet und dabei häufig an dem Fahrzeuglängsträger befestigt. Im Stand der Technik sind Crashboxen aus verschiedenen Metallarten oder aus Verbundwerkstoffen bekannt. Die aus Hohlprofilabschnitten bestehenden Crashboxen sind im Regelfall so angeordnet, dass ihre Mittellängsachsen parallel zur Fahrzeuglängsachse gerichtet sind.

Im Einsatzfall, also im Crashfall des Fahrzeugs, werden die Crashboxen zum Zwecke der Energieabsorption in Richtung ihrer Längsachse ziehharmonikaähnlich beziehungsweise nach Art eines Balges zusammengefaltet. Dabei wird durch den Umformprozess die Aufprallenergie absorbiert. Zudem erfolgt während des Umformens zugleich eine Verzögerung der Einleitung der auftretenden Kräfte des Aufpralls in das Chassis beziehungsweise die Längsträger des Fahrzeuges.

Durch verschiedene Crash-Tests ist es bekannt, dass zum Ingangsetzen des Faltprozesses für die Zwecke einer Energieabsorption zunächst eine Kraftspitze, ein sogenannter Anfangspeak, überwunden werden muss. Nachdem diese Kraftspitze überwunden wurde, setzt sich der Faltvorgang der als Energieabsorptionsbauteil fungierenden Crashbox mit bereits deutlich geringerer Krafteinleitung fort.

Diverse Crashtests haben ergeben, dass der Anfangspeak, also die benötigte Kraftspitze zur Überwindung des Ingangsetzens des Faltprozesses, 30 bis 40 % über der für das weitere Zusammenfalten notwendigen Kraft liegt.

Eine derartige Crashbox als Energieabsorptionsbauteil ist hinsichtlich ihrer Energieabsorption derart zu dimensionieren, dass die Gefahr einer bleibenden Verformung, insbesondere des Chassisteils, also beispielsweise des Längsträgers, an das das Energieabsorptionsbauteil angeschlossen ist, erst eintritt, wenn die das Energieabsorptionsbauteil bildende Crashbox auf Block zusammengefaltet ist. Somit wird ein Energieabbau bei niedrigen Fahrzeuggeschwindigkeiten erreicht, ohne dass das Chassis beziehungsweise die Längsträger verformt werden. Mit dem vollständigen Zusammenfalten hat die Crashbox ihre Eigenschaft als Energieabsorptionsbauteil verloren.

Aus den genannten Gründen muss die Höhe der anfänglichen Kraftspitze, also des Anfangspeaks zum Ingangsetzen der Energieabsorption der Crashbox unterhalb derjenigen Kraft liegen, bei der eine bleibende Verformung und somit Beschädigung des Chassisteils des Kraftfahrzeuges einsetzt, beziehungsweise zu befürchten ist. Somit ist es durch den Einsatz derartiger Crashboxen als Energieabsorptionsbauteile sichergestellt, dass im Crashfall zuerst das Energieabsorptionsbauteil in Form einer Crashbox vollständig verformt wird und lediglich darüber hinausgehende Kräfte ans Chassisteil bzw. den Längsträger des Kraftfahrzeuges weitergegeben werden. Hierdurch ist eine frühzeitige Beschädigung von Fahrzeugteilen wie beispielsweise dem Chassis oder einem Längsträger des Fahrzeugs weitestgehend vermieden.

Bei den im Stand der Technik bekannten Lösungen zur Ausgestaltung derartiger Crashboxen als Energieabsorptionsbauteile ist es nachteilig, dass die mögliche Gesamtenergieaufnahme des Energieabsorptionsbauteils maßgeblich durch die Höhe des Anfangspeaks, also durch die Höhe der zum Ingangsetzen des Energieabsorptionsprozesses notwendigen Kraft bestimmt wird. Zudem weisen diese Bauteile häufig eine große Länge auf.

Um diese Nachteile zu vermeiden, sind im Stand der Technik Energieabsorptionsbauteile bekannt, in die Schwächungen eingebracht worden sind. Beispielsweise können derartige Schwächungen durch Einprägen vorgegebener Knickbeziehungsweise Faltlinien oder durch Einbringen von Löchern erzeugt werden. Mit derartigen Maßnahmen kann zwar die Höhe des erforderlichen Anfangspeaks reduziert werden, doch dies erfordert zusätzlich kostenintensive Arbeitsschritte zur Herstellung der Crashboxen und wirkt sich gegebenenfalls nachteilig auf das nachfolgende Faltverhalten aus.

Aus der DE 38 33 048 A1 ist ein Stoßfänger für Kraftfahrzeuge bekannt, bei dem eine Art Crashbox zwei ineinander gesetzte Prallrohre aufweist, die aus Faserverbundwerkstoff bestehen. Diese werden im Crashfall zerstört, was zu einer Konstanthaltung der auf die Längsträger des Fahrzeuges einwirkenden Kraft führen soll.

Aus der DE 10 2006 058 604 A1 ist eine Crashbox bekannt, die ein gehäuseartiges Deformationsprofil aus Metallblech aufweist, welches von einem Mantel aus Faserverbundwerkstoff umgeben ist.

Aus der DE 197 17 473 A1 ist ein Energieabsorberelement für Schienenfahrzeuge bekannt, welches aus ineinander gesetzten rohrförmigen Elementen besteht, deren eines aus Metall und deren anderes aus Kunststoff oder keramischen Material besteht.

Aus der GB 2 307 665 A ist ein Stoßfänger mit Crashbox bekannt, wie er in Oberbegriff des Anspruches 1 angegeben ist. Hierbei besteht die Crashbox aus einem durch zwei von einer Montageplatte abragende Arme gebildeten ersten Hohlprofilabschnitt, der leicht verformbar ist, und einer in diesen eingesetzten, an der Montageplatte fixierten Buchse, die erst nach der teilweisen Verformung des ersten Hohlprofilabschnittes im Crashfall verformt wird und Stoßenergie aufnimmt und in Umformungsenergie umwandelt. Der hierbei auftretende Anfangspeak bei der Verformung der Buchse ist relativ hoch und nicht variabel, er tritt allerdings erst nach der gewollten teilweisen Verformung der Arme auf.

Ausgehend von dem eingangs genannten Stand der Technik liegt der vorliegenden Erfindung die Aufgabe zugrunde, einen Stoßfänger mit einem Energieabsorptionsbauteil in Form einer Crashbox der eingangs genannten Art zu schaffen, welcher kostengünstig und einfach herstellbar ist, welcher dabei auch bei nur geringem Anfangspeak eine hohe Kraftaufnahme und gleichmäßige Verformung im Crashfall ermöglicht, wobei zudem eine nur möglichst geringe Länge der Crashboxen ausreichen soll.

Zur Lösung dieser Aufgabe schlägt die Erfindung vor, dass der weitere Hohlprofilabschnitt relativ zum Hohlprofilabschnitt derart ausgerichtet ist, dass die Längskanten der Eckbereiche des weiteren Hohlprofilabschnittes sich an den Seitenflächen des Hohlprofilabschnittes schon vor der Umformung abstützen oder zumindest nach Beginn einer crashbedingten Umformung.

Durch die Anordnung mindestens eines weiteren Hohlprofilabschnittes innerhalb der durch einen Hohlprofilabschnitt gebildeten Crashbox ist es ermöglicht, die zum Ingangsetzen des Faltprozesses für die Zwecke einer Energieabsorption nötige Kraftspitze, also den Anfangspeak, äußerst variabel und dabei insbesondere äußerst niedrig auszulegen. So kann, beispielsweise um einen besonders niedrigen Anfangspeak zu erzielen, beim Beginn der Energieabsorption lediglich der Hohlprofilabschnitt der Crashbox verformt werden, und im Verlauf der Verformung der weitere Hohlprofilabschnitt dann zunächst mit einem Teil seines Querschnitts und dann zunehmend bis über seinen gesamten Querschnitt gemeinsam mit dem Hohlprofilabschnitt verformt werden, wodurch sukzessive eine erhöhte und langsam zunehmende Kraftaufnahme im Verlauf der Verformung ermöglicht ist. Somit ist es ermöglicht, einerseits einen niedrigen Anfangspeak zur Verformung zu ermöglichen als auch andererseits über den gesamten Verformungsweg der Crashbox eine weitestgehend gleichmäßige Verformung bis zur vollständigen Verformung zu erreichen, bis eine weitere Kraftaufnahme zu einer bleibenden Verformung an Fahrzeugteilen wie beispielsweise Chassisteilen oder den Längsträgern des Fahrzeuges führt.

Des Weiteren kann eine derartige erfindungsgemäße Crashbox mit nur einer geringen Länge dimensioniert werden, und dabei trotz der nur geringen Länge bei einem geringen Anfangspeak hohe Kräfte im Crashfall durch Umformung absorbieren.

Der Lastaufnahmeverlauf während des Zusammenfaltens der erfindungsgemäßen Crashbox kann durch die Gestaltung der vom Geradschnitt abweichenden Schnittkante bestimmt werden. Als Geradschnitt wird ein Schnitt bezeichnet, der quer zur Mittellängsachse des Hohlprofilabschnittes oder des weiteren Hohlprofilabschnittes verläuft oder parallel zur Abschlussfläche des Stoßfängerquerträgers oder parallel zur Anschlussfläche einer Grundplatte, die mit Chassisteilen verbunden wird. Mit dem Schnittwinkel an der vom Geradschnitt abweichenden Endkante an der Stirnseite des weiteren Hohlprofilabschnittes ist ein Verlauf der Kraftaufnahme der Crashbox einstellbar. Im Crashfall trifft zunächst nur die Spitze des weiteren Hohlprofilabschnittes auf Bestandteile des Stoßfängerquerträgers oder des Chassis und nimmt an der Umformung teil. Erst bei weiterer Verformung tragen dann zunehmende Querschnittsanteile bis der gesamte Querschnitt des weiteren Hohlprofilabschnittes zusammen mit dem Hohlprofilabschnitt der Crashbox zur Umformung beiträgt.

Die Endkanten des Hohlprofilabschnittes sind vorzugsweise gerade und an die daran anzuschließenden Teile zum Beispiel eine Grundplatte, die an das Fahrzeugchassis oder dessen Längsträger befestigbar ist, oder ein Profil oder dergleichen als Bestandteil des Stoßfängerquerträgers angepasst, sodass die Kanten umlaufend mit diesen Teilen verschweißt werden können. Die Kanten werden als "Geradschnitt" bezeichnet. Demgegenüber ist mindestens eine Endkante des weiteren Hohlprofilabschnittes mit einer von der Endkantenform des Hohlprofilabschnittes derart abweichend geformt, dass das Stirnende von der Endkante des Hohlprofils keinen gleichen konstanten Abstand hat, sondern unterschiedlichen, indem die Endkante z. B. schräg geschnitten oder bogenförmig oder stufig ist. Dadurch wird erreicht, dass bei der Verformung des Hohlprofilabschnittes infolge eines Crashs zwar das ganze Hohlprofil über seinen gesamten Querschnitt an der gewünschten Umformung teilnimmt, während der weitere Hohlprofilabschnitt zunächst nur mit seinem der Endkante des Hohlprofilabschnitts zunächst liegenden Teilbereich seiner Endkante an der Umformung teilnimmt und erst mit zunehmendem Umformungsweg in Längsrichtung der Crashbox zunehmend weitere Teilbereiche des Querschnitts und dann der gesamte Querschnitt des weiteren Hohlprofilabschnitts teilnehmen.

Eine Endkante des weiteren Hohlprofilabschnitts kann vollständig bündig mit der einen Endkante des Hohlprofilabschnitts abschließen und ebenfalls an der Grundplatte oder dem Bestandteil des Stoßfängerquerträgers angeschweißt oder in anderer Weise bleibend fixiert sein. Dies ist für die Montage bevorzugt.

Es können aber auch beide Stirnenden des weiteren Hohlprofilabschnittes mit der oben beschriebenen abweichenden Formgestaltung ausgebildet sein.

Ergänzend zu der vom Geradschnitt abweichenden Endkante des weiteren Hohlprofilabschnittes kann auch der Hohlprofilabschnitt eine vom rechtwinkligen Geradschnitt abweichende Endkante an mindestens einer Stirnseite aufweisen. Das vom Geradschnitt abweichende stirnseitige Ende des Hohlprofilabschnittes kann dabei entweder an der dem Längsträger des Fahrzeugs zugewandten Seite, der dem Stoßfängerquerträger zugewandten Seite oder an beiden Stirnseiten des Hohlprofilabschnittes ausgebildet sein. Eine derartige vom Geradschnitt abweichende Kontur der Endkante ist an die jeweilige Anschlussfläche des Fahrzeuglängsträgers oder des Stoßfängerquerträgers angepasst, sodass die Endkante vollumfänglich bündig mit dem Stoßfängerquerträger einerseits und dem Längsträger des Fahrzeuges andererseits verbindbar, beispielsweise verschweißbar ist.

Dadurch, dass der weitere Hohlprofilabschnitt eine vom Hohlprofilabschnitt abweichende Querschnittform hat, wird eine besonders vorteilhafte Umformung im Crashfall erreicht.

Ist beispielsweise der Hohlprofilabschnitt rechteckig oder quadratisch im Querschnitt und der weitere Hohlprofilabschnitt im Querschnitt polygonal, zum Beispiel dreieckig, so stützt sich während der Umformung der weitere Hohlprofilabschnitt linienförmig im Bereich der Ecklängskanten an der Innenwandung des Hohlprofilabschnittes ab und stützt diesen, wodurch das Umformverhalten der Gesamtbaueinheit positiv beeinflusst wird.

Das gewünschte Verhalten im Crashfall wird vor allem dadurch erreicht, dass der weitere Hohlprofilabschnitt relativ zum Hohlprofilabschnitt derart ausgerichtet ist, dass die Längskanten der Eckbereiche des weiteren Hohlprofilabschnittes sich an den Seitenflächen des Hohlprofilabschnittes schon vor der Umformung abstützen oder zumindest nach Beginn einer crashbedingten Umformung. Beispielsweise kann der Hohlprofilabschnitt als größerer Rechteckquerschnitt ausgebildet sein und der weitere Hohlprofilabschnitt als kleinerer Rechteckquerschnitt, der gegenüber dem Hohlprofilabschnitt um seine Längsachse gedreht, zum Beispiel 45°, in diesen eingesetzt ist.

Insbesondere kann bevorzugt vorgesehen sein, dass der Hohlprofilabschnitt und/ oder der weitere Hohlprofilabschnitt an seiner dem Chassis zugewandten Stirnseite mit der ersten Seite einer Grundplatte verbunden ist, wobei die Grundplatte andererseits mit Chassisteilen oder Längsträgerteilen verbunden oder verbindbar ist.

Durch die Anordnung der Crashbox auf oder an einer Grundplatte ist ein schnelles Montieren und Demontieren gegebenenfalls auch zum Austausch der durch die Hohlprofilabschnitte gebildeten Crashboxen an Fahrzeugteilen wie insbesondere dem Chassis oder einem Längsträger ermöglicht. Hierdurch ist ein sicherer Halt am Fahrzeug und ein kostengünstiger Austausch nach dem Crashfall gegeben.

Weiter kann bevorzugt vorgesehen sein, dass der weitere Hohlprofilabschnitt gleichlang wie der Hohlprofilabschnitt ausgebildet ist.

Alternativ kann besonders bevorzugt vorgesehen sein, dass der weitere Hohlprofilabschnitt eine geringere Länge aufweist als der Hohlprofilabschnitt.

Durch die Bemessung der Länge des weiteren Hohlprofilabschnittes ist der zu überwindende Anfangspeak beim crashbedingten Zusammenfalten der Hohlprofilabschnitte im Crashfall variabel. So ist beispielsweise bei einer gleichlangen Ausbildung des weiteren Hohlprofilabschnittes wie der Hohlprofilabschnitt eine gemeinsame Verformung des Hohlprofilabschnittes und eines Teils des weiteren Hohlprofilabschnittes schon zur Überwindung des Anfangspeaks erforderlich. Dabei nimmt von Beginn der Verformung an der Hohlprofilabschnitt die Kräfte über seinen gesamten Querschnitt auf, während der weitere Hohlprofilabschnitt zwar von Beginn an Umformkräfte aufnimmt, jedoch infolge der vom Geradabschnitt abweichenden Form mindestens einer seiner Stirnenden anfangs nur über einen Teil seines Querschnitts und erst mit zunehmender Umformung über seinen gesamten Querschnitt. Hierdurch wird der Anfangspeak der Crashbox herabgesetzt, der Gesamtenergieabbau durch die Crashbox aber nicht herabsetzt. Bei einer kürzeren Ausbildung des weiteren Hohlprofilabschnittes wird der Anfangspeak lediglich durch die Dimensionierung des Hohlprofilabschnittes beeinflusst. Erst nach einem gewissen Verformungsweg des Hohlprofilabschnittes nimmt während des Zusammenfaltens des Hohlprofilabschnittes zusätzlich der weitere Hohlprofilabschnitt Umformkräfte auf und wird ebenfalls zusammengefaltet, wodurch ein zusätzlicher Peak und eine erhöhte Kraftaufnahme im Verlauf des Zusammenfaltens entsteht, da nun beide gemeinsam, also der Hohlprofilabschnitt und der weitere Hohlprofilabschnitt sich zusammenfalten und eine höhere Kraftaufnahme ermöglichen. Auch hierbei ist aber wesentlich, dass der weitere Hohlprofilabschnitt anfangs nur mit einem Teilquerschnitt Kräfte aufnimmt und erst bei weiterer Verformung mit seinem gesamten Querschnitt an der Umformung teilnimmt.

Auch kann insbesondere bevorzugt vorgesehen sein, dass der Hohlprofilabschnitt im Querschnitt rechteckig und der weitere Hohlprofilabschnitt eine vom Rechteck abweichende Querschnittsform aufweist.

Durch die Gestaltung der Querschnittsform sowohl des Hohlprofilabschnitts als auch des weiteren Hohlprofilabschnitts kann besonderer Einfluss auf das Zusammenfaltverhalten der Hohlprofilabschnitte im Crashfall genommen werden. Das heisst, dass je nach Ausgestaltung der Profilform des Hohlprofilabschnittes und/oder des weiteren Hohlprofilabschnittes das Verhalten beim Zusammenfalten der Crashbox im Crashfall variieren kann. So können sich beispielsweise während des Zusammenfaltens Profilkanten oder Profilwandungsteile des weiteren Hohlprofilabschnittes mit ihren Außenseiten an Wänden des Hohlprofilabschnitts innenseitig abstützen und dabei während des Zusammenfaltens den Kraftaufnahmeverlauf der Crashbox bestimmen. Hierzu hat sich insbesondere die Anordnung eines im Querschnitt vom Hohlprofilabschnitt abweichenden weiteren Hohlprofilabschnittes als vorteilhaft gezeigt.

Hierzu kann besonders bevorzugt vorgesehen sein, dass der Hohlprofilabschnitt im Querschnitt rechteckig und der weitere Hohlprofilabschnitt im Querschnitt rautenförmig ausgebildet ist.

Auch eine derartige Kombination aus einem im Querschnitt rechteckigen Hohlprofilabschnitt und einem im Querschnitt rautenförmigen weiteren Hohlprofilabschnitt stellt ein positives Zusammenfaltverhalten der Crashbox im Crashfall dar.

Weiter kann besonders bevorzugt vorgesehen sein, dass die Ecken einer eckigen Form oder Rautenform des Querschnitts des weiteren Hohlprofilabschnitts, der in den Hohlprofilabschnitt eingesetzt ist, formschlüssig oder stoffschlüssig mit den Innenseitenflächen des Hohlprofilabschnitts verbunden sind oder daran anliegen.

Hierdurch ist zum einen ein spielfreier Sitz des weiteren Hohlprofilabschnitts innerhalb des Hohlprofilabschnitts ermöglicht und zum anderen eine Geräuschbildung beispielsweise durch Vibrationen, etc. vermieden.

Auch kann vorgesehen sein, dass die Eckenkanten einer eckigen Form oder einer Rautenform des Querschnitts des weiteren Hohlprofilabschnitts von den Innenseitenflächen des Hohlprofilabschnitts beabstandet sind.

Hierbei kann vorgesehen sein, dass der Abstand einige Millimeter beträgt.

Auch durch einen gewünschten und vorbestimmten Abstand zwischen den Ecken der Rautenform des weiteren Hohlprofilabschnittes und den Innenseitenflächen des Hohlprofilabschnittes kann ein gewünschter Kraftaufnahmeverlauf beim Zusammenfalten der Crashbox im Crashfall bestimmt werden. Zudem wird auch hierdurch dem Entstehen von Geräuschen zwischen den Teilen entgegengewirkt.

Zudem kann besonders bevorzugt vorgesehen sein, dass der weitere Hohlprofilabschnitt und der Hohlprofilabschnitt aus gleichem Material bestehen.

Auch kann besonders bevorzugt vorgesehen sein, dass der weitere Hohlprofilabschnitt und/oder der Hohlprofilabschnitt aus einer Leichtmetalllegierung, insbesondere aus einer Aluminiumlegierung, bestehen.

Alternativ kann dazu besonders bevorzugt vorgesehen sein, dass der weitere Hohlprofilabschnitt und der Hohlprofilabschnitt aus verschiedenen Materialien bestehen.

Je nach gewünschtem Kraftaufnahmeverlauf beim Zusammenfalten sowohl des Hohlprofilabschnitts als auch des weiteren Hohlprofilabschnittes im Crashfall kann durch die Auswahl der zu verwendenden Materialien Einfluss auf das Kraftaufnahmeverhalten während des Zusammenfaltens genommen werden. So kann es je nach gewünschtem Kraftaufnahmeverlauf beispielsweise vorteilhaft sein, verschiedene Materialien für den Hohlprofilabschnitt und den weiteren Hohlprofilabschnitt zu verwenden. So kann beispielsweise der Hohlprofilabschnitt aus einem eine größere Festigkeit aufweisenden Material bestehen als der weitere Hohlprofilabschnitt, der innerhalb des Hohlprofilabschnittes angeordnet ist.

Schließlich kann besonders bevorzugt vorgesehen sein, dass der weitere Hohlprofilabschnitt und der Hohlprofilabschnitt jeweils aus einem Strangpressprofilabschnitt bestehen, wobei an den Enden des Hohlprofilabschnittes einenends eine Grundplatte zur Befestigung am Chassis und andernends ein Profilteil oder eine Platte zur Befestigung am Stoßfängerquerträger fixiert ist und ein Ende des weiteren Hohlprofilabschnitts an der Grundplatte oder der Platte des Stoßfängerträgers fixiert ist und das andere Ende Abstand von der Platte des Stoßfängerträgers oder der Grundplatte hat.

Hierdurch ist eine kostengünstige Herstellung zumindest der Hohlprofilabschnitte ermöglicht.

Ein Ausführungsbeispiel der Erfindung ist in den Figuren dargestellt und im Folgenden näher beschrieben.

Es zeigt:
- Fig. 1: einen Stoßfänger in Isometrischer Ansicht;
- Fig. 2: einen Teil des Stoßfängers in Draufsicht;
- Fig. 3: eine Grundplatte mit Crashbox Gemäß Stand der Technik im Schnitt B-B der Fig. 2 gesehen;
- Fig. 4: desgleichen im Schnitt A-A der Fig. 2 gesehen;
- Fig. 5: eine erfindungsgemäße Crashbox mit Grundplatte im Mittellängsschnitt analog Fig. 4 gesehen;
- Fig. 6: eine Grundplatte mit erfindungsgemäßer Crashbox analog Fig. 3 gesehen;
- Fig. 7: eine erfindungsgemäße Crashbox mit Teil eines Stoßfängers und Grundplatte im Mittellängsschnitt analog Fig. 4 gesehen;
- Fig. 8: eine Grundplatte mit einem weiteren Ausführungsbeispiel einer erfindungsgemäßen Crashbox analog Fig. 3 gesehen.

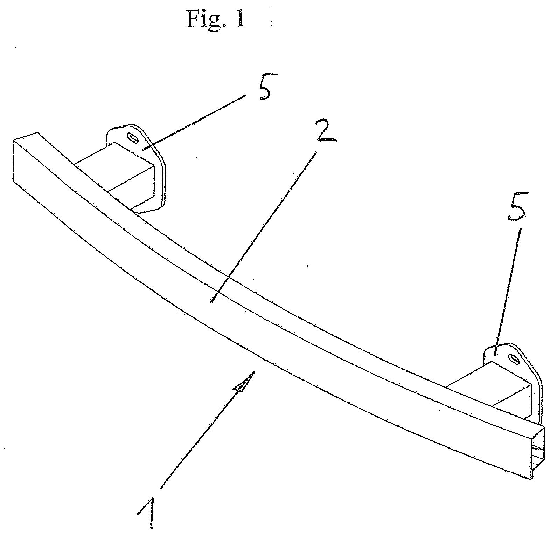

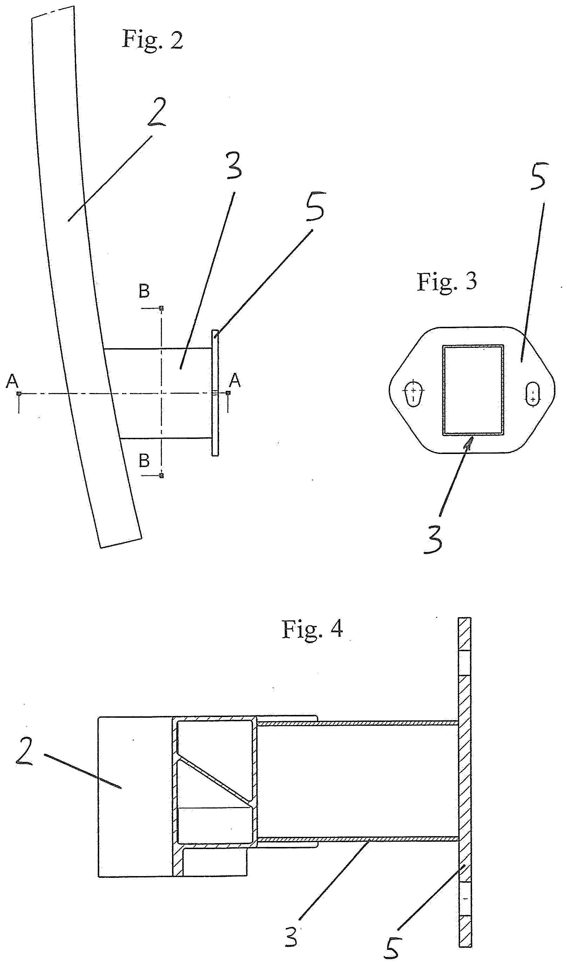

In den Figuren ist ein Stoßfänger 1 für ein Kraftfahrzeug gezeigt. Figur 1 zeigt dabei den Stoßfänger in Gänze und die Figuren 2, 4, 5 und 7 teilweise Ansichten eines Stoßfängers. Der Stoßfänger 1 weist zumindest einen Stoßfängerquerträger 2, zum Beispiel aus Stahl, auf und ist mit 2 voneinander beabstandeten Crashboxen aus Metall, zum Beispiel aus Stahl, versehen. Die Crashboxen sind im Ausführungsbeispiel mittelbar mit einem ersten Endbereich an dem Stoßfängerquerträger 2 und mit einem zweiten Endbereich an am Kraftfahrzeug ausgebildetem Chassisteilen befestigt. Die Chassisteile sind üblicherweise durch die Längsträger des Kraftfahrzeuges gebildet. Die im Stand der Technik bekannten Crashboxen bestehen wie aus den Figuren 2 bis 4 ersichtlich, aus einem Hohlprofilabschnitt 3 und sind zur Energieabsorption von in Längsrichtung des Kraftfahrzeugs auftretenden Kräften als Deformationselement ausgebildet. Derartige Crashboxen falten sich im Crashfall zur Kraftaufnahme bis auf Block zusammen und nehmen so Kräfte auf, bevor diese unmittelbar auf den Längsträger bzw. andere Chassisteile des Kraftfahrzeuges einwirken und dort Schaden verursachen können. Der Hohlprofilabschnitt 3 ist als Rechteckrohrabschnitt ausgebildet, dessen Mittellängsachse vorzugsweise parallel zur Fahrzeuglängsachse ausgerichtet ist.

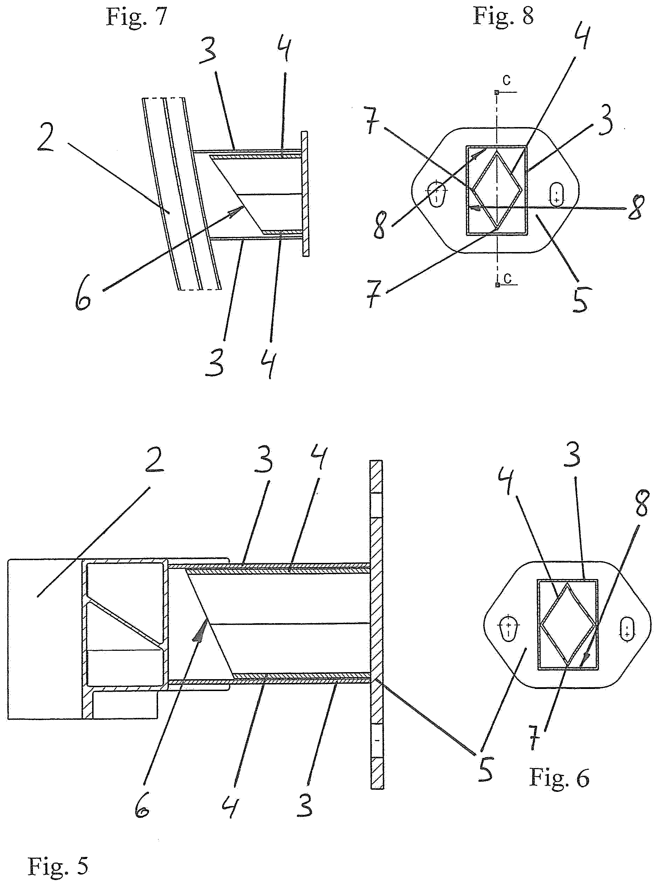

Erfindungsgemäß und wie aus den Figuren 5 bis 8 ersichtlich ist innerhalb des Hohlprofilabschnittes 3 jeder Crashbox ein weiterer Hohlprofilabschnitt 4 angeordnet. Der weitere Hohlprofilabschnitt 4 ist ebenfalls als Abschnitt eines eckigen Rohres ausgebildet, dessen Längsmittelachse parallel oder koaxial zur Mittelachse des Hohlprofilabschnittes 3 gerichtet ist. Der weitere Hohlprofilabschnitt 4 weist im Ausführungsbeispiel an einer Stirnseite, nämlich der dem Stoßfängerquerträger 2 nahen Stirnseite eine vom Geradschnitt des Hohlprofilabschnitts 3 abweichende Endkante auf. Hierdurch ist im Crashfalle eine unterschiedliche, durch die vom Geradschnitt abweichende Form und/oder Schrägstellung der Endkante einstellbare Lastaufnahme bis zum Erreichen des Gesamtquerschnitts ermöglicht. Mittels einer derart ausgebildeten Crashbox ist es ermöglicht, den zum Ingangsetzen des Faltprozesses im Crashfall notwendigen Anfangspeak gering zu gestalten, weil dann nur der Querschnitt des Hohlprofilabschnittes 3 zur Umformung beaufschlagt ist, sodass ohne weitere Beschädigungen am Fahrzeug bereits bei geringer Aufprallgeschwindigkeit eine Verformung und somit Kraftaufnahme der Crashbox erfolgen kann. Nach dem Anfangspeak wird der Umformwiderstand größer, wenn nämlich auch zunächst ein Teilquerschnitt (an der Spitze) und dann der gesamte Querschnitt des weiteren Hohlprofilabschnitts 4 zur Umformung beaufschlagt wird, sodass sich im Verlauf des Zusammenfaltens, also während der gemeinsamen Verformung, die Kraftaufnahme steigert, sobald nicht nur der Hohlprofilabschnitt 3, sondern zusätzlich auch der weitere Hohlprofilabschnitt 4 sukzessive verformt wird.

Zur schnellen und einfachen und somit kostengünstigen Verbindung mit einem Kraftfahrzeug ist im Ausführungsbeispiel jede Crashbox, bestehend aus einem Hohlprofilabschnitt 3 und einem weiteren Hohlprofilabschnitt 4 mit den bündig abschließenden Randkanten an der dem Kraftfahrzeug zugewandten Stirnseite mit der ersten Seite einer Grundplatte 5 verbunden. Die Grundplatte 5 ist andererseits mit Chassisteilen oder Längsträgerteilen des Kraftfahrzeuges verbindbar, sodass insbesondere im Falle eines Austausches diese mit samt der Crashbox schnell und einfach vom Kraftfahrzeug entfernt werden kann und beispielsweise gegen ein neues Bauteil ausgetauscht werden kann.

Bei einem in den Figuren nicht gezeigten Ausführungsbeispiel sind der weitere Hohlprofilabschnitt 4 und der Hohlprofilabschnitt 3 gleichlang ausgebildet.

Bei dem in den Figuren gezeigten Ausführungsbeispiel ist wie aus Figuren 5 bis 8 ersichtlich, der weitere Hohlprofilabschnitt 4 geringfügig kürzer ausgebildet als der Hohlprofilabschnitt 3, wobei das schräge Ende des Hohlprofilabschnitts 4 vor dem Ende des Hohlprofilabschnitts 3 endet. Hierdurch ist im Crashfalle zur Überwindung des Anfangspeaks lediglich ein beginnendes Zusammenfalten des Hohlprofilabschnittes 3 im überstehenden Bereich erforderlich, sodass erst im weiteren Verlauf des Zusammenfaltens der weitere Hohlprofilabschnitt 4 zunächst über einen Teil seines Querschnitts und dann vollständig gemeinsam mit dem Hohlprofilabschnitt 3 verformt wird und somit nur ein geringer Anfangspeak zum Ingangsetzen des Faltprozesses im Crashfall nötig ist und eine Vergleichmäßigung des Faltprozesses bis zu dessen Ende erfolgt.

Das Kraftaufnahmeverhalten kann dabei sowohl durch den Abstand zwischen stirnseitigem Ende des Hohlprofilabschnittes 3 und dem stirnseitigem Ende des weiteren Hohlprofilabschnitts 4 als auch durch den Winkel der vom Geradschnitt abweichenden schrägen Schnittkante der Stirnseite des weiteren Hohlprofilabschnittes 4 beeinflusst und gezielt gesteuert werden. Der Anwender hat es in der Hand den Winkel oder auch die Form des Schrägschnittes entsprechend den gewünschten Anforderungen einzustellen.

Bei dem in den Figuren gezeigtem Ausführungsbeispiel weist der weitere Hohlprofilabschnitt 4 eine vom Hohlprofilabschnitt 3 abweichende Querschnittsform auf.

Der weitere Hohlprofilabschnitt 4 kann auch, wie in den Figuren nicht gezeigt, an beiden Stirnseiten eine vom Geradschnitt abweichende schräge Endkante aufweisen.

Im Ausführungsbeispiel ist der Hohlprofilabschnitt 3 im Querschnitt rechteckig und der weitere Hohlprofilabschnitt 4 im Querschnitt rautenförmig ausgebildet.

Bei dem in Figur 6 gezeigten Ausführungsbeispiel liegen die Eckkanten 7 der Rautenform des weiteren Hohlprofilabschnittes 4 formschlüssig etwa mittig an den Innenseitenflächen des Hohlprofilabschnittes 3 an und sind gegebenenfalls damit stoffschlüssig verbunden. Je nach Ausführungsbeispiel können die Eckkanten 7 der Rautenform des weiteren Hohlprofilabschnittes 4 auch von den Innenseitenflächen des Hohlprofilabschnittes 3 beabstandet sein, wie in Figur 8 gezeigt. In beiden Fällen wird der Widerstand, den die Crashbox der Verformung entgegensetzt nach einem Verformungsbeginn gesteigert, wenn sich nämlich die Eckkanten durch die Verformung an den Innenseitenflächen zunehmend abstützen und einem Einfallen der Seitenwände des Hohlprofilabschnittes entgegen wirken.

Bei dem in den Figuren gezeigten Ausführungsbeispiel bestehen sowohl der Hohlprofilabschnitt 3 als auch der weitere Hohlprofilabschnitt 4 aus gleichem Material, nämlich einer Aluminiumlegierung. Alternativ können der weitere Hohlprofilabschnitt 4 und der Hohlprofilabschnitt 3 auch aus verschiedenen Materialien, zum Beispiel Stahl und Aluminium, bestehen. Auch hierdurch kann Einfluss genommen werden auf den Verlauf der Kraftaufnahme während des Faltprozesses.

Zur kostengünstigen Herstellung sind sowohl der weitere Hohlprofilabschnitt 4 als auch der Hohlprofilabschnitt 3 jeweils aus einem Strangpressprofilabschnitt gebildet.

### Bezugszeichenliste:

1 Stoßfänger
2 Stoßfängerquerträger
3 (äußerer) Hohlprofilabschnitt
4 (innerer) weiterer Hohlprofilabschnitt
5 Grundplatte
6 schräg auslaufend (an 4)
7 Eckkanten der Rautenform
8 Innenseitenfläche von 3

## Patentansprüche

1. Stoßfänger (1) für ein Kraftfahrzeug, zumindest bestehend aus einem Stoßfängerquerträger (2) und mindestens zwei von einander beabstandeten, mittelbar oder unmittelbar mit einem ersten eine erste Kante bildenden Endbereich an dem Stoßfängerquerträger (2) und mit einem zweiten, eine zweite Kante bildenden Endbereich an am Kraftfahrzeug ausgebildeten Chassisteilen oder Längsträgerteilen angeordneten Crashboxen, wobei die Crashboxen aus mindestens einem Hohlprofilabschnitt (3) aus Metall mit einer ersten und einer zweiten Kante an seinen Enden bestehen und zur Energieabsorption von in Längsrichtung des Kraftfahrzeugs auftretenden Kräften als Deformationselement ausgebildet sind, wobei innerhalb des Hohlprofilabschnitts (3) jeder Crashbox mindestens ein weiterer Hohlprofilabschnitt (4) aus Metall angeordnet ist, der an mindestens einer Stirnseite eine von der einen Geradschnitt bildenden Endkante des Hohlprofilabschnitts (3) abweichende Endkante aufweist, sodass im Crashfall eine unterschiedliche Lastaufnahme bis zum Erreichen des Gesamtquerschnitts erfolgt, indem zu Beginn eines Crashumformereignisses nur ein Teil des Querschnitts des weiteren Hohlprofilabschnittes (4) an der Umformung teilnimmt und erst nach einem gewissen Verformungsweg dessen gesamter Querschnitt an der Umformung teilnimmt, und wobei der weitere Hohlprofilabschnitt (4) eine vom Hohlprofilabschnitt (3) abweichende Querschnittsform aufweist, **dadurch gekennzeichnet, dass** der weitere Hohlprofilabschnitt relativ zum Hohlprofilabschnitt derart ausgerichtet ist, dass die Längskanten der Eckbereiche des weiteren Hohlprofilabschnittes sich an den Seitenflächen des Hohlprofilabschnittes abstützen (schon vor der Umformung) oder zumindest nach Beginn einer crashbedingten Umformung.

2. Stoßfänger (1) nach Anspruch 1, **dadurch gekennzeichnet, dass** der Hohlprofilabschnitt (3) und/ oder der weitere Hohlprofilabschnitt (4) an seiner dem Chassis zugewandten Stirnseite mit der ersten Seite einer Grundplatte (5) verbunden ist, wobei die Grundplatte (5) andererseits mit Chassisteilen oder Längsträgerteilen verbunden oder verbindbar ist.

3. Stoßfänger (1) nach Anspruch 1 oder 2, **dadurch gekennzeichnet, dass** der weitere Hohlprofilabschnitt (4) gleichlang wie der Hohlprofilabschnitt (3) ausgebildet ist.

4. Stoßfänger (1) nach Anspruch 1 oder 2, **dadurch gekennzeichnet, dass** der weitere Hohlprofilabschnitt eine geringere Länge aufweist als der Hohlprofilabschnitt.

5. Stoßfänger (1) nach einem der Ansprüche 1 bis 4, **dadurch gekennzeichnet, dass** der Hohlprofilabschnitt (3) im Querschnitt rechteckig und der weitere Hohlprofilabschnitt (4) eine vom Rechteck abweichende Querschnittsform aufweist.

6. Stoßfänger (1) nach einem der Ansprüche 1 bis 5, **dadurch gekennzeichnet, dass** der Hohlprofilabschnitt (3) im Querschnitt rechteckig und der weitere Hohlprofilabschnitt (4) im Querschnitt rautenförmig ausgebildet ist.

7. Stoßfänger (1) nach einem der Ansprüche 1 bis 6, **dadurch gekennzeichnet, dass** die Ecken (7) einer eckigen Form oder Rautenform des Querschnitts des weiteren Hohlprofilabschnitts (4), der in den Hohlprofilabschnitt (3) eingesetzt ist, formschlüssig oder stoffschlüssig mit den Innenseitenflächen des Hohlprofilabschnitts (3) verbunden sind oder daran anliegen.

8. Stoßfänger (1) nach einem der Ansprüche 1 bis 6, **dadurch gekennzeichnet, dass** die Eckenkanten (7) einer eckigen Form oder einer Rautenform des Querschnitts des weiteren Hohlprofilabschnitts (4) von den Innenseitenflächen des Hohlprofilabschnitts (3) beabstandet sind.

9. Stoßfänger (1) nach Anspruch 8, **dadurch gekennzeichnet, dass** der Abstand einige Millimeter beträgt.

10. Stoßfänger (1) nach einem der Ansprüche 1 bis 9, **dadurch gekennzeichnet, dass** der weitere Hohlprofilabschnitt (4) und der Hohlprofilabschnitt (3) aus gleichem Material bestehen.

11. Stoßfänger (1) nach einem der Ansprüche 1 bis 10, **dadurch gekennzeichnet, dass** der weitere Hohlprofilabschnitt (4) und/oder der Hohlprofilabschnitt (3) aus einer Leichtmetalllegierung bestehen.

12. Stoßfänger (1) nach Anspruch 11, **dadurch gekennzeichnet, dass** die Leichtmetalllegierung eine Aluminiumlegierung ist.

13. Stoßfänger (1) nach einem der Ansprüche 1 bis 9 oder Anspruch 11 oder Anspruch 12, **dadurch gekennzeichnet, dass** der weitere Hohlprofilabschnitt (4) und der Hohlprofilabschnitt (3) aus verschiedenen Materialien bestehen.

14. Stoßfänger (1) nach einem der Ansprüche 1 bis 13, **dadurch gekennzeichnet, dass** der weitere Hohlprofilabschnitt (4) und der Hohlprofilabschnitt (3) jeweils aus einem Strangpressprofilabschnitt bestehen, wobei an den Enden des Hohlprofilabschnittes (3) einenends eine Grundplatte (5) zur Befestigung am Chassis und andernends ein Profilteil oder eine Platte zur Befestigung am Stoßfängerquerträger (2) fixiert ist und ein Ende des weiteren Hohlprofilabschnitts (4) an der Grundplatte (5) oder der Platte des Stoßfängerträgers (2) fixiert ist und das andere Ende Abstand von der Platte des Stoßfängerträgers (2) oder der Grundplatte (5) hat.

## Claims

1. A shock absorber (1) for a motor vehicle, at least comprised of a shock absorber crossbeam (2) and at least two spaced crash boxes disposed directly or indirectly with a first end section forming a first edge at the shock absorber crossbeam (2) and with a second end section forming a second edge at chassis portions or longitudinal beam portions provided at the motor vehicle, the crash boxes comprising at least one hollow profile portion (3) made of metal with a first and a second edge at its ends and for energy absorption of forces acting in the longitudinal direction of the motor vehicle, being configured as a deformation element, within the hollow profile portion (3) of each crash box at least one additional hollow profile portion (4) made of metal is disposed, which includes at least at one front face a terminal edge differing from the terminal edge of the hollow profile portion (3) representing a straight cut, such that in case of a crash a different load absorption up to reaching the total cross section occurs, by that at the beginning of a crash deformation event only a portion of the cross section of the additional hollow profile portion (4) participates in the deformation and only after a specific deformation path the entire cross section thereof participates in the deformation, and the additional hollow profile portion (4) having a cross-sectional shape differing from the hollow profile portion (3), **characterized by that** the additional hollow profile portion, relative to the hollow profile portion is aligned such that the longitudinal edges of the corner sections of the additional hollow profile portion bear against the side faces of the hollow profile portion (already before the deformation or at least after the beginning of a deformation caused by crash.

2. The shock absorber (1) of claim 1, **characterized by that** the hollow profile portion (3) and/or the additional hollow profile portion (4) at its front face facing the chassis is connected to the first side of a base plate (5), the base plate (5), on the other hand, being connected or connectable to chassis portions or longitudinal beam portions.

3. The shock absorber (1) of claim 1 or 2, **characterized by that** the additional hollow profile portion (4) has the same length as the hollow profile portion (3).

4. The shock absorber (1) of claim 1 or 2, **characterized by that** the additional hollow profile portion has a smaller length than the hollow profile portion.

5. The shock absorber (1) of one of claims 1 to 4, **characterized by that** the hollow profile portion (3) has a rectangular cross section, and the additional hollow profile portion (4) has a cross sectional shape differing from a rectangle.

6. The shock absorber (1) of one of claims 1 to 5, **characterized by that** the hollow profile portion (3) has a rectangular cross section, and the additional hollow profile portion (4) has a rhomboid cross section.

7. The shock absorber (1) of one of claims 1 to 6, **characterized by that** the corners (7) of an angular shape or rhomboid shape of the cross section of the additional hollow profile portion (4) that is inserted in the hollow profile portion (3), are connected by an interlocking and/or material bond connection to the inner side faces of the hollow profile portion (3) or bear against them.

8. The shock absorber (1) of one of claims 1 to 6, **characterized by that** the corner edges (7) of an angular shape or rhomboid shape of the cross section of the additional hollow profile portion (4) are spaced from the inner side faces of the hollow profile portion (3).

9. The shock absorber (1) of claim 8, **characterized by that** the spacing is a couple of millimeters.

10. The shock absorber (1) of one of claims 1 to 9, **characterized by that** the additional hollow profile portion (4) and the hollow profile portion (3) are made of the same material.

11. The shock absorber (1) of one of claims 1 to 10, **characterized by that** the additional hollow profile portion (4) and/or the hollow profile portion (3) are made of a light-metal alloy.

12. The shock absorber (1) of claim 11, **characterized by that** the light-metal alloy is an aluminum alloy.

13. The shock absorber (1) of one of claims 1 to 9 or claim 11 or claim 12, **characterized by that** the additional hollow profile portion (4) and the hollow profile portion (3) are made of different materials.

14. The shock absorber (1) of one of claims 1 to 13, **characterized by that** the additional hollow profile portion (4) and the hollow profile portion (3) are each made of an extruded section, at the ends of the hollow profile portion (3), at one end, a base plate (5) for attachment at the chassis being attached, and at the other end, a profile part or a plate for attachment at the shock absorber crossbeam (2) being fixed, and one end of the additional hollow profile portion (4) being fixed at the base plate (5) or the plate of the shock absorber crossbeam (2), and the other end being spaced from the plate of the shock absorber crossbeam (2) or the base plate (5).

## Revendications

1. Pare-chocs (1) pour un véhicule automobile, au moins comprenant une traverse (2) du pare-chocs et au moins deux boîtes-tampon (appelées «crash boxes») espacées disposées directement ou indirectement avec une première partie d'extrémité formant une première arête à la traverse (2) du pare-chocs et avec une deuxième partie d'extrémité formant une deuxième arête à des parties de châssis ou parties de longeron prévues au véhicule automobile, les boîtes-tampon comprenant au moins un tronçon de profilé creux (3) en métal avec une première et une deuxième arête à ses extrémités, et pour l'absorption d'énergie des forces agissant dans la direction longitudinale du véhicule automobile étant configurées comme élément de déformation, au-dedans du tronçon de profilé creux (3) de chaque boîte-tampon au moins un tronçon additionnel de profilé creux (4) en métal étant disposé, qui comporte au moins à une face frontale un bord d'extrémité différent du bord d'extrémité du tronçon de profilé creux (3) représentant une coupe rectiligne, de façon qu'en cas d'un choc une absorption différente de la charge de jusqu'à atteindre la section transversale totale ait lieu, en ce qu'au commencement d'un événement de déformation par choc seulement une partie de la section transversale du tronçon additionnel de profilé creux (4) prend part à la déformation et seulement après une course de déformation spécifique la section transversale entière de celui-ci prend part à la déformation, et le tronçon additionnel de profilé creux (4) ayant une forme en coupe différente de celle du tronçon de profilé creux (3), **caractérisé en ce que** le tronçon additionnel de profilé creux, par rapport au tronçon de profilé creux, est aligné de telle façon que les arêtes longitudinales des cornées du tronçon additionnel de profilé creux viennent s'appuyer sur les faces latérales du tronçon de profilé creux (déjà avant la déformation) ou au moins après le commencement d'une déformation causée par choc.

2. Pare-chocs (1) selon la revendication 1, **caractérisé en ce que** le tronçon de profilé creux (3) et/ou le tronçon additionnel de profilé creux (4) à sa face frontale en vis-à-vis du châssis est relié au premier côté d'une plaque d'embase (5), la plaque d'embase (5), à l'autre côté, étant reliée ou destinée à être reliée à des parties de châssis ou des parties de longeron.

3. Pare-chocs (1) selon la revendication 1 ou 2, **caractérisé en ce que** le tronçon additionnel de profilé creux (4) a la même longueur comme le tronçon de profilé creux (3).

4. Pare-chocs (1) selon la revendication 1 ou 2, **caractérisé en ce que** le tronçon additionnel de profilé creux a une longueur inférieure à celle du tronçon de profilé creux.

5. Pare-chocs (1) selon une des revendications 1 à 4, **caractérisé en ce que** le tronçon de profilé creux (3) a une forme en section rectangulaire, et le tronçon additionnel de profilé creux (4) a une forme en section différente d'un rectangle.

6. Pare-chocs (1) selon une des revendications 1 à 5, **caractérisé en ce que** le tronçon de profilé creux (3) a une forme en section rectangulaire, et le tronçon additionnel de profilé creux (4) a une forme en losanges.

7. Pare-chocs (1) selon une des revendications 1 à 6, **caractérisé en ce que** les coins (7) d'une forme angulaire ou en losanges de la section transversale du tronçon additionnel de profilé creux (4) qui est inséré dans le tronçon de profilé creux (3), sont reliés par assemblage à concordance de forme ou de matériau aux faces latérales intérieures du tronçon de profilé creux (3) ou prennent s'appuyer sur celles-ci.

8. Pare-chocs (1) selon une des revendications 1 à 6, **caractérisé en ce que** les arêtes de coin (7) d'une forme angulaire ou en losanges de la section transversale du tronçon additionnel de profilé creux (4) sont espacées des faces latérales intérieures du tronçon de profilé creux (3).

9. Pare-chocs (1) selon la revendication 8, **caractérisé en ce que** la distance est de quelques millimètres.

10. Pare-chocs (1) selon une des revendications 1 à 9, **caractérisé en ce que** le tronçon additionnel de profilé creux (4) et le tronçon de profilé creux (3) sont en le même matériau.

11. Pare-chocs (1) selon une des revendications 1 à 10, **caractérisé en ce que** le tronçon additionnel de profilé creux (4) et/ou le tronçon de profilé creux (3) sont en un alliage de métal léger.

12. Pare-chocs (1) selon la revendication 11, **caractérisé en ce que** l'alliage de métal léger est un alliage d'aluminium.

13. Pare-chocs (1) selon une des revendications 1 à 9 ou revendication 11 ou revendication 12, **caractérisé en ce que** le tronçon additionnel de profilé creux (4) et le tronçon de profilé creux (3) sont en des matériaux différents.

14. Pare-chocs (1) selon une des revendications 1 à 13, **caractérisé en ce que** le tronçon additionnel de profilé creux (4) et le tronçon de profilé creux (3) sont chacun en une section profilée extrudée, aux extrémités du tronçon de profilé creux (3), à une extrémité, une plaque d'embase (5) pour la fixation au châssis étant prévue, et à l'autre extrémité, une pièce profilée ou une plaque pour la fixation à la traverse (2) du pare-chocs étant prévue, et une extrémité du tronçon additionnel de profilé creux (4) étant fixée à la plaque d'embase (5) ou la plaque de la traverse (2) du pare-chocs, et l'autre extrémité étant espacée de la plaque de la traverse (2) du pare-chocs ou la plaque d'embase (5).
